Europäisches Patentamt

European Patent Office

Office européen des brevets

(11) Veröffentlichungsnummer: **0 485 942 A1**

# (12) EUROPÄISCHE PATENTANMELDUNG

(21) Anmeldenummer: **91119245.8**

(22) Anmeldetag: **12.11.91**

(51) Int. Cl.⁵: **B63H 9/10**, F16G 11/10,
//B63B35/79

(30) Priorität: **16.11.90 DE 4036544**

(43) Veröffentlichungstag der Anmeldung:
**20.05.92 Patentblatt 92/21**

(84) Benannte Vertragsstaaten:
**AT DE FR**

(71) Anmelder: **Marker, Hannes**
**Alpspitzstrasse 37**
**W-8100 Garmisch-Partenkirchen(DE)**

(72) Erfinder: **Marker, Hannes**
**Alpspitzstrasse 37**
**W-8100 Garmisch-Partenkirchen(DE)**

(74) Vertreter: **Flosdorff, Jürgen, Dr.**
**Alleestrasse 33**
**W-8100 Garmisch-Partenkirchen(DE)**

(54) **Vorrichtung zum verstellbaren Befestigen wenigstens eines Zuggliedes.**

(57) Die Befestigungsvorrichtung enthält eine Manschette (1a) aus einem starren Kunststoff, die an einem Ende mit einer Übertotpunkthebeleinrichtung (3, 5) verbunden ist. An dem anderen Ende der Manschette sind ebenso wie an dem freien Ende des Spannhebels der Übertotpunkthebeleinrichtung ringförmige Ansätze 9, 11 angeformt, die kammartig wechselseitig ineinander eingreifen und von einem Tampen (1) durchgriffen sind. Die Durchgangsbohrungen der ringförmigen Ansätze fluchten bei geöffneter Übertotpunkthebeleinrichtung miteinander, so daß in dieser Freigabeposition der Tampen durch die Öffnungen bewegbar ist, um ihn in eine gewünschte Lage zu bringen. Durch Schließen des Betätigungshebels werden die Durchgangsbohrungen seitlich gegeneinander versetzt, wodurch der Tampen in einen wellenförmigen Verlauf gebracht wird, mit dem er sicher in den Öffnungen festgeklemmt ist. Die Vorrichtung ist insbesondere zur verstellbaren Befestigung eines Trapeztampens an einem Gabelbaum eines Surfbretts geeignet.

FIG. 3

EP 0 485 942 A1

Die Erfindung betrifft eine Vorrichtung zum verstellbaren Befestigen wenigstens eines Zuggliedes wie einer Leine, eines Bandes, einer Ketter oder dergleichen an einem Bauteil, insbesondere eines Trapeztampens an einem Gabelbaum eines Surfbretts, mit Öffnungen, die von dem Tampen oder dergleichen durchgriffen sind.

Eine Vorrichtung der betrachteten Art kann entweder durch geeignete Mittel an einem Bauteil fixiert, z.B. angeschraubt oder angeformt sein und die Aufgabe erfüllen, die Leine oder dergleichen an dieser Stelle festzuhalten bzw. festzuklemmen, oder aber die Vorrichtung kann auch selbst an dem Bauteil verstellbar gehalten sein, so daß zusätzlich ihre Position einstellbar ist.

Derartige Vorrichtungen sind allgemein zu den unterschiedlichsten Zwecken verwendbar, bei denen z.B. eine Leine in einer Befestigungslage zu sichern ist.

Die Erfindung betrifft insbesondere eine Vorrichtung, mit der schnell und einfach ein Trapeztampen an einem Gabelbaum eines Surfbretts an ausgewählter Stelle und in ausgewählter Länge befestigt werden kann.

Hierzu sind bisher vielfältige Lösungen bekannt und in Gebrauch, mit denen ein Trapeztampen zwar meist sicher an einem Gabelbaum befestigt werden kann, deren Handhabung jedoch recht umständlich ist. So ist es beispielsweise weit verbreitet, Trapeztampen mittels eines Klettverschlusses am Gabelbaum zu befestigen, wobei der Tampen durch einen Kanal des Klettverschlusses hindurchgeführt und durch einen Knoten gesichert ist. Wenn ein Surfer die Position des Trapeztampens an dem Gabelbaum ändern will, muß er hierzu einen oder beide Klettverschlüsse öffnen und in der ausgewählten neuen Position wieder stramm ziehen und schließen. Wenn er die Länge des Trapeztampens ändern will, muß er wenigstens einen der beiden die Trapeztampenlänge festlegenden Knoten lösen und durch einen neuen Knoten ersetzen, der an einer anderen Stelle den Bewegungsbereich des Tampens begrenzt. Vor allem der letztere Vorgang ist recht zeitaufwendig und umständlich zu bewerkstellige, zumal sich ein über lange Zeit festgezogener Knoten nicht ohne weiteres öffnen läßt, und es ist schwierig, die gewünschte Länge des Trapeztampens auf diese Weise präzise einzustellen.

Es ist auch bereits ein Trapeztampenclip bekannt, der einen Übertotpunkthebelverschluß hat, mit dem die axiale Position des Clips am Gabelbaum verstellbar ist. Dieser Clip hat zwei in axialer Richtung beabstandete Durchgangsbohrungen, durch die der Trapeztampen geführt wird, der sich durch Ausbildung einer Schlaufe zwischen den beiden Öffnungen selbsttätig bekneift, wenn der Trapeztampen belastet ist. Wenn bei dieser vorbekannten Lösung die Position eines Clips verändert und die Länge des Trapeztampens verstellt werden soll, sind hieru wiederum zwei getrennte Befestigungsvorgänge erforderlich. Außerdem läßt sich auf diese Weise der Tampen nur solange sicher befestigen, wie dieser einen vorgeschriebenen Durchmesser hat und sich im einwandfreien Zustand befindet.

Der vorliegenden Erfindung liegt die Aufgabe zugrunde, eine Vorrichtung der betrachteten Art so weiter zu entwickeln, daß ein Zugglied wie eine Leine, ein Band, eine Kette oder dergleichen auf besonders einfache Weise an einer ausgewählten Stellen sicher zu befestigen ist. Die Vorrichtung soll zudem insbesondere zur Befestigung eines Trapeztampens an einem Gabelbaum geeignet sein und eine bequeme Verstellung der wirksamen Trapeztampenlänge ermöglichen.

Diese Aufgabe wird erfindungsgemäß durch die im Kennzeichen des Patentanspruchs 1 ange- gebenen Merkmale gelöst. Vorteilhafte Weiterbil- dungen der Erfindung sind in den Unteransprüchen gekennzeichnet.

Gemäß der vorliegenden Erfindung ist vorgesehen, daß mehrere Öffnungen kammartig bzw. nach Art eines Scharniers in Richtung einer Längsachse hintereinander liegend angeordnet und von der Leine, dem Band, der Kette oder dergleichen durchgriffen sind, wobei dieses Zugglied hierbei eine Art Scharnierachse bildet, ohne daß diese Anordnung allerdings die Funktion eines Scharniers ausübt. Die Ausbildung ist vielmehr so getroffen, daß die Öffnungen in einer Freigabeposition des Tampens auf einer gemeinsamen Längsachse im wesentlichen miteinander fluchten, so daß der Tampen verstellbar ist, d.h. in Richtung der Längsachse in eine ausgewählte Position bewegbar ist. Dies beinhaltet auch eine Freigabeposition des Tampens, bei der die Öffnungen nicht exakt miteinander fluchten, sondern etwas versetzt zueinander angeordnet sind, wenn hierbei der Tampen so weit freigegeben ist, daß er in Richtung der Längsachse bewegbar ist. Eine derartige Ausbildung kann z.B. zu dem Zweck getroffen werden, den Tampen in der weiter unten beschriebenen Klemmlage in eine unregelmäßige Wellenform zu versetzen, um die Festhaltekräfte möglichst gleichmäßig auf die einzelnen Öffnungen zu verteilen.

Gemäß der Erfindung ist ferner eine Einrich- tung, vorzugsweise eine Spanneinrichtung angeord- net, mit der dann die Öffnungen derart gegenüber der gemeinsamen Längsachse versetzbar sind, daß das Zugglied unbeweglich in den Öffnungen gehalten ist. Anstelle einer seitlichen oder quer zur Längsachse verlaufenden Versetzung können eine oder mehrere Öffnungen so gedreht oder verschwenkt werden, daß der Tampen nicht mehr in axialer Richtung bewegbar ist. Wesentlich ist, daß das Zugglied aus der ursprünglichen, vorzugsweise geradlinigen, jedenfalls seine Bewegbarkeit zulassenden Anordnung ausgebogen wird, wodurch ein Tampen so gegen Teile der Lochwände gepreßt wird, daß die zum festen Sitz erforderlichen Reibungs- und Klemmkräfte entstehen. Wenn das Zugglied eine Kette ist, können hierbei die Kettenglieder zueinander versetzt werden, so daß sie sich an den Rändern der Öffnungen verfangen bzw. festsetzen.

Je nach Art des zu arretierenden Zuggliedes kann es ausreichen, zwei Öffnungen anzuordnen, die in der Befestigungslage gegeneinander versetzt werden. Wenn ein Trapeztampen sicher befestigt werden soll, sollte an einem Teil der Vorrichtung wenigstens eine Öffnung, vorzugsweise zwei Öffnungen, und an einem anderen Teil der Vorrichtung wenigstens zwei Öffnungen, vorzugsweise drei Öffnungen ausgebildet sein, wobei die letzteren jeweils beidseitig der ersteren Öffnungen angeordnet sein sollten. Hierdurch ist gewährleistet, daß der Trapeztampen in der Klemmstellung der Vorrichtung in mehrere wellenförmige Abschnitte verformt wird, wodurch so große Reibungs- und Klemmkräfte hervorgerufen werden, daß der Tampen absolut fest sitzt. Selbstverständlich liegt es im Rahmen der Erfindung, auch eine größere Anzahl von Öffnungen anzuordnen, die kammartig von zwei Seiten kommend axial hintereinander angeordnet sind.

Mit großem Vorteil wird vorgeschlagen, daß die Spanneinrichtung eine Übertotpunkthebeleinrichtung ist. Hiermit lassen sich auf einfache Weise die Kräfte ausüben, mit denen die Öffnungen einer Seite gegenüber den Öffnungen der anderen Seite verlagert werden und das Zugglied entsprechend verformt wird. Vorzugsweise werden die Öffnungen einer Seite aus der gemeinsamen Längsachse seitlich herausgezogen, wobei die Klemmposition durch die Übertotpunktlage des Spannhebels gesichert ist.

Es wird ausdrücklich betont, daß auch andere geeignete Spanneinrichtungen im Rahmen der Erfindung liegen, beispielsweise Zugbänder, die mit einem Klettverschluß versehen sein können, wobei es darauf ankommt, daß die Spanneinrichtung die von dem Zugglied durchgriffenen Öffnungen so weit zueinander versetzen kann, daß sich das Zugglied nicht mehr in axialer Richtung bewegen läßt. Die Spanneinrichtung kann auch so auf eine oder mehrere Öffnungen einwirken, daß diese nicht seitlich verschoben, sondern verschwenkt werden.

Es ist auch nicht unbedingt erforderlich, daß eine oder mehrere von dem Zugglied durchgriffene Öffnungen gegenüber den anderen Öffnungen verlagert werden, sondern es kann beispielsweise auch eine Druckeinrichtung zwischen Führungen des Tampens einen wellenförmigen oder mäanderförmigen Verlauf des Tampens hervorrufen, der zur Folge hat, daß das Zugglied bei den jeweils auftretenden Kräften nicht mehr in axialer Richtung bewegbar ist.

Die erfindungsgemäße Vorrichtung weist vorzugsweise eine Manschette auf, die den Gabelbaum oder dergleichen umschließt. Diese Manschette kann aus einem starren Material, beispielsweise aus Kunststoff bestehen. Allerdings liegt es auch im Rahmen der Erfindung, daß die Vorrichtung aus einem flexiblen Material besteht, beispielsweise einem flexiblen, den Gabelbaum umfassenden Band, sofern sich mittels einer Spanneinrichtung der erforderliche leicht wellenförmige Verlauf des Zuggliedes einstellen läßt.

Zur Befestigung eines Trapeztampens ist jedoch eine starre Manschette bevorzugt, die mit einer Übertotpunkthebeleinrichtung versehen ist, die zwischen einer Öffnungsstellung der Manschette, in der diese entlang des Gabelbaumholms verschiebbar ist, und einer Schließstellung bewegbar ist, in der die Manschette unbeweglich am Holm sitzt. D.h., die Manschette sollte zumindest aus einem Manschettenteil, das den Gabelbaum teilweise umschließt und eine entsprechende Innenkontur hat, und der Hebeleinrichtung bestehen, die die Manschette in Umfangsrichtung schließt.

Hierbei kann die Ausbildung mit Vorzug so getroffen werden, daß an einem Manschettenteil, vorzugsweise an dessen Ende, stationäre Öffnungen und an dem Endabschnitt des Spannhebels der Übertotpunkthebeleinrichtung bzw. dem Ende eines damit verbundenen, weiteren Manschettenteils verlagerbare Öffnungen ausgebildet sind, so daß durch Schließen der Übertotpunkthebeleinrichtung gleichzeitig die Manschette am Holm und der Tampen in den Öffnungen in einen unbeweglichen Sitz genommen sind. Diese Ausbildung hat somit den Vorteil, daß beide Verstellvorgänge durch Betätigung ein und desselben Hebels vorgenommen werden können, da mit dem Schließen der Manschette an der ausgewählten Stelle des Gabelbaumholms gleichzeitig die eingestellte Länge des Trapeztampens fixiert wird. Damit ist es möglich, auch in schwierigen Situationen, beispielsweise auf dem Wasser, mit einem schnellen Handgriff die gewünschten Verstellungen am Trapeztampen vorzunehmen.

Allerdings ist der erfindungsgemäße Trapezclip nicht darauf beschränkt, daß mit einer einzigen Spanneinrichtung gleichzeitig die beiden vorstehend genannten Wirkungen erzielt werden. Die Ausbildung kann auch so getroffen sein, daß eine vorzugsweise mittels einer Übertotpunkthebeleinrichtung schließbare Manschette mit der Vorrichtung verbunden ist, die dem Fixieren des Tampens dient, wobei deren Öffnungen mittels einer gesonderten Spanneinrichtung, vorzugsweise einer zweiten Übertotpunkthebeleinrichtung verlagerbar sind. In einem solchen Fall sind demnach zum Fixieren des Clips am Holm und zum Fixieren des Tampens zwei getrennte Hebel vorgesehen. Eine derartige Ausbildung kann beispielsweise in der Weise realisiert werden, daß zwei manschettenartige Teile axial hintereinander liegend und miteinander verbunden angeordnet sind, oder es können die Bestandteile der Fixiervorrichtung an der Außenseite der den Gabelbaumholm umschließenden Manschette angeordnet sein.

Des weiteren wird vorgeschlagen, die Öffnungen durch angeformte, ringförmige Ansätze auszubilden. Eine weitere Möglichkeit besteht darin, die Öffnung nicht ringförmig zu schließen, sondern hakenförmig auszubilden, so daß in der Freigabestellung der Tampen nach oben aus den Öffnungen entnehmbar ist.

Die Öffnungen können eine im wesentlichen kreisförmige Querschnittsform haben. Besonders bevorzugt ist aber, den Öffnungen eine solche Querschnittsform zu geben, die sich zum freien Ende hin verjüngt, so daß Tampen unterschiedlicher Dicke sicher eingeklemmt und fixiert werden können. Für einen solchen Fall wird ferner vorgeschlagen, die Übertotpunkthebeleinrichtung in Umfangsrichtung verstellbar anzuordnen, um den Trapezclip bzw. die Fixiervorrichtung und deren Schließkraft einstellen zu können.

Außerdem ist es sehr zweckmäßig, die ringförmigen oder hakenförmigen Ansätze mit einem gewissen axialen Abstand aufeinander folgen zu lassen, damit sich der Tampen auf die gewünschte Weise verformen läßt. Wenn die Ansätze vorzugsweise eine Breite von etwa 10 mm haben, sollten die Zwischenräume ca. 2 mm breit sein, womit sich ohne großen Kraftaufwand der gewünschte Verlauf des Tampens beim Festklemmen hervorrufen läßt.

Die erfindungsgemäße Vorrichtung zeichnet sich durch einen großen Bedienungskomfort aus, was insbesondere bei der Verwendung als Trapeztampenmanschette gilt, wenn hierbei mit einem einzigen Betätigungshebel gleichzeitig zwei Arretiervorgänge vorgenommen werden. Aber auch bei anderen Anwendungszwecken, bei denen die Vorrichtung selbst unverschieblich angebracht sein kann (jedoch nicht muß), ist eine bequeme Arretierungsmöglichkeit geschaffen, die sich durch höchste Zuverlässigkeit auszeichnet. Durch eine entsprechende Anzahl von gegeneinander verlagerbaren Öffnungen können die Klemmkräfte praktisch beliebig erhöht werden.

Die erfindungsgemäße Vorrichtung hat zudem einen einfachen und robusten Aufbau, so daß sie verhältnismäßig billig herstellbar ist und eine lange Nutzungsdauer hat.

Weitere Merkmale, Vorteile und Einzelheiten der Erfindung ergeben sich aus der nachfolgenden Beschreibung sowie anhand der Zeichnung. Dabei zeigen:

Fig. 1    einen erfindungsgemäßen Trapezclip in einem Zustand, in dem dieser an einem Gabelbaumholm angesetzt werden kann;

Fig. 2    den Clip gemäß Fig. 1 (mit weggelassenen Teilen) in einem Zustand, in dem ein durch die Öffnungen durchgeführter Tampen in axialer Richtung bewegbar ist;

Fig. 3    eine geringfügig abgeänderte Ausführungsform des Trapezclips in der Arretierungsstellung;

Fig. 4    Trapezclip-Öffnungen einer abweichenden Form zur Handhabung von Tampen unterschiedlicher Dicke;

Fig. 5    eine in Umfangsrichtung verstellbare Spannhebeleinrichtung in rein schematischer Darstellung und

Fig. 6    eine Aufsicht auf wesentliche Teile einer weiteren Ausführungsform der Erfindung, die in ihrer Position fixiert ist.

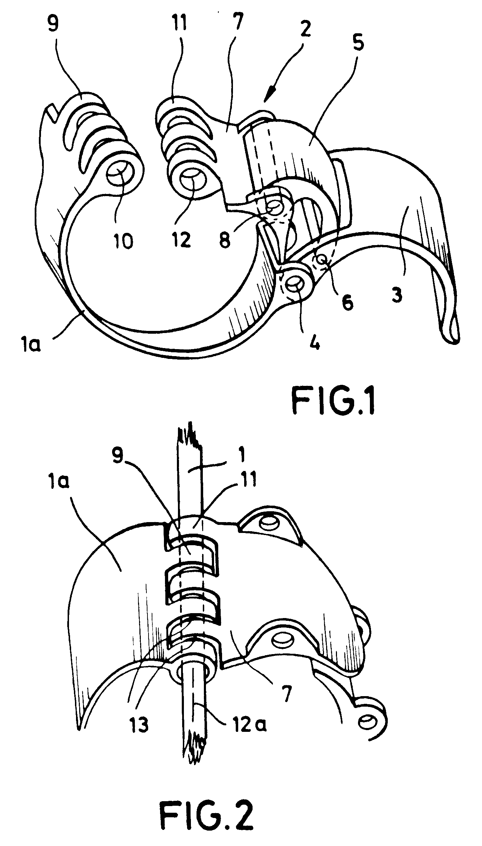

Die weitgehend schematisch dargestellten Figuren 1 bis 3 zeigen einen manschettenförmigen Trapezclip, der zur Befestigung eines Trapeztampens 1 vorgesehen ist. Der Trapezclip enthält ein Manschettenteil 1a, das aus einem starren Kunststoff besteht, und eine Übertotpunkthebeleinrichtung, die allgemein mit 2 bezeichnet ist. Die Übertotpunkthebeleinrichtung 2 enthält wiederum einen Betätigungshebel 3, der bei 4 an einem Hebel des Manschettenteils 1 angelenkt ist, einen Spannhebel 5, der an einer Zwischenposition 6 des Betätigungshebels 3 angelenkt ist, sowie ein weiteres Manschettenteil 7, das bei 8 an dem Spannhebel 5 angelenkt ist.

An dem anderen Ende des Manschettenteils 1a sind drei ringförmige Ansätze 9 mit Durchgangsbohrungen 10 angeformt (Fig. 1 und 2), während an dem freien Endabschnitt des Manschettenteils 7 eine gleiche Anzahl von ringförmigen Ansätzen 11 mit Durchgangsbohrungen 12 angeformt sind. Die ringförmigen Ansätze 9 und 11 haben gleiche Abmessungen, was auch für die Durchgangsbohrungen 10 und 12 zutrifft.

Fig. 2 zeigt einen Zustand, in dem der Trapezclip auf einem nicht dargestellten Gabelbaumholm sitzt und in dem ferner der Trapeztampen 1 nach Art einer Scharnierachse durch die miteinander fluchtenden Durchgangsbohrungen 10 und 12 der ringförmigen Ansätze 9 und 11 hindurchgeführt ist.

In dieser Figur sind der Einfachheit halber der Betätigungshebel 3 und der Spannhebel 5 weggelassen.

Die ringförmigen Ansätze 9 und 11 sind in Richtung der Längsachse 12 abwechselnd aneinander gereiht, wobei zwischen ihren einander zugewandten Stirnflächen jeweils ein Abstand 13 verbleibt. Die dargestellte Freigabestellung ist ausgehend von dem Zustand gemäß Figur 1 durch vollständiges Öffnen der Übertotpunkthebeleinrichtung 2 bewerkstelligt.

Der Tampen 1 verläuft geradlinig durch die Öffnungen 10, 12 und ist daher in axialer Richtung 12a verstellbar, d.h. er kann in beiden Richtungen durch die Öffnungen gezogen werden, um eine gewünschte Arretierposition einzustellen.

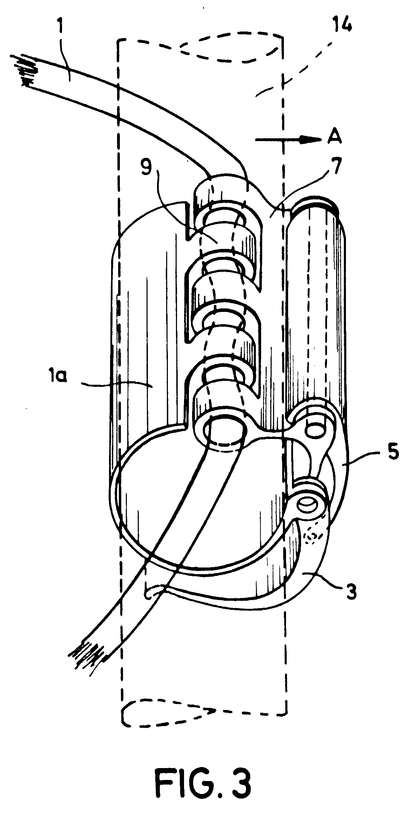

Der Arretierzustand der Manschette ist in Figur 3 dargestellt, wobei diese Abbildung um 90° gedreht ist. Durch Verschwenken des Betätigungshebels 3 in die Verschlußstellung werden über den Spannhebel 5 die ringförmigen Ansätze 11 in Richtung des Pfeils A in Figur 3 aus der gemeinsamen Längsachse 12a verlagert, wodurch der Tampen 1 den angedeuteten wellenförmigen Verlauf erhält. Hierdurch entstehen so große Reibungs- und Klemmkräfte, daß der Tampen 1 unbeweglich in den Durchgangsbohrungen gehalten ist. Gleichzeitig wird hierbei die Manschette so um den Gabelbaumholm 14 gespannt, daß sie unverschieblich am Holm sitzt.

Bei der in Figur 3 dargestellten Ausführungsform sind an dem Manschettenteil 1 zwei ringförmige Vorsprünge 9 ausgebildet, denen auf der anderen Seite 3 Vorsprünge 11 zugeordnet sind.

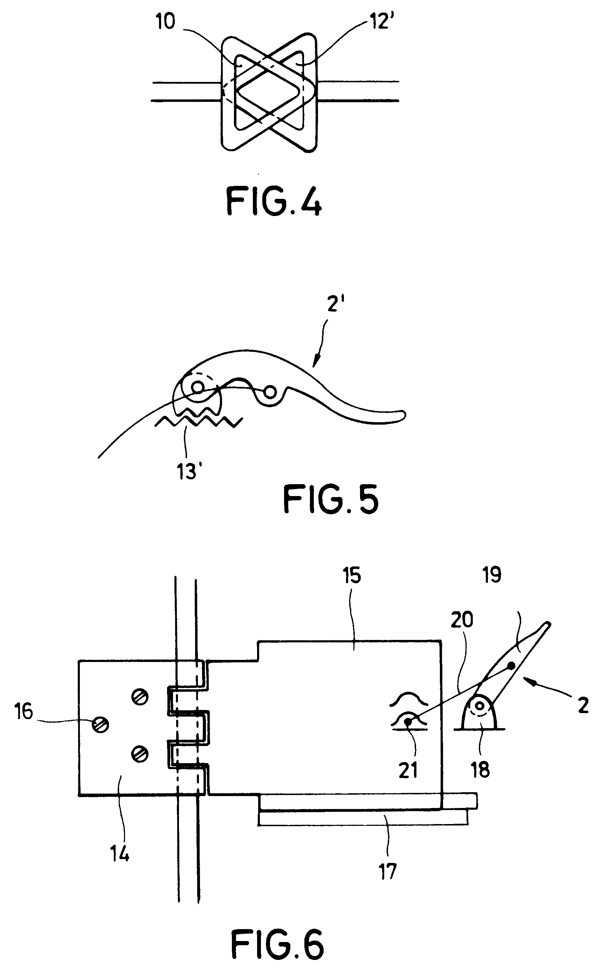

Damit die Befestigungsvorrichtung mit Tampen und mit Holmen unterschiedlicher Durchmesser verwendbar ist, können ihre Innenabmessungen verstellbar sein. Hierzu kann die Schwenkachse des Betätigungshebels oder des Spannhebels beispielsweise in entsprechenden Langlöchern verstellbar oder an verschiedenen Punkten rastbar sein, wie dies rein schematisch in Figur 5 dargestellt ist. Dies liegt selbstverständlich im Rahmen der Erfindung.

Fig. 4 zeigt Öffnungen 10' und 12', die sich querschnittlich jeweils zu ihrem freien Ende hin verjüngen, wobei die Erfindung natürlich nicht auf die dargestellte dreieckige Querschnittsform beschränkt ist. Die derart geformten Öffnungen ermöglichen es, Tampen unterschiedliche Dicke einzuführen und sicher festzuklemmen, wobei die Spanneinrichtung z.B. in der in Figur 5 schematisch angedeuteten Weise verstellbar ist.

Figur 6 zeigt eine alternative Ausführungsform der Erfindung. Die dargestellte Befestigungsvorrichtung ist in ihrer Position nicht veränderbar, sondern mit ihrem Vorrichtungsteil 14 mittels Schrauben 16 an einem nicht dargestellten Bauteil fest angebracht. Das Vorrichtungsteil 14 enthält wie der weiter oben beschriebene Trapezclip Öffnungen, die wechselweise mit Öffnungen eines verschieblichen Vorrichtungsteils 15 angeordnet sind, welch letzteres mittels einer Spanneinrichtung 2 zwischen der dargestellten Freigabestellung des Tampens und dessen Klemmstellung bewegbar ist. Hierzu enthält die Spanneinrichtung 2 einen bei 18 angelenkten Spannhebel 19, der über ein Zugglied 20 mit dem Vorrichtungsteil 15 bei 21 verbunden ist. Das Vorrichtungsteil 15 ist in einer Führungseinrichtung 17 verschieblich geführt.

Die in Figur 6 lediglich schematisch dargestellte Befestigungsvorrichtung könnte beispielsweise auch an der Außenseite einer Manschette angeordnet sein, die -mit einer Übertotpunkthebeleinrichtung versehen- einen Gabelbaumholm umfaßt. In einem solchen Falle kann das stationäre Vorrichtungsteil 14 fest an der Manschette angeformt sein, während das Vorrichtungsteil 15 beweglich angebracht ist.

**Patentansprüche**

1. Vorrichtung zum verstellbaren Befestigen wenigstens eines Zuggliedes wie einer Leine, eines Bandes, einer Kette oder dergleichen an einem Bauteil, insbesondere eines Trapeztampens an einem Gabelbaum eines Surfbretts, mit Öffnungen, die von dem Tampen durchgriffen sind,
   **dadurch gekennzeichnet**,
   daß mehrere Öffnungen (10, 12; 10', 12') kammartig hintereinander liegend angeordnet und von dem Tampen (1) durchgreifbar sind, daß die Öffnungen (10, 12; 10', 12') in einer Freigabeposition in einem solchen Maße miteinander fluchten, daß der Tampen (1) in Richtung seiner Längsachse (12a) durch die Öffnungen bewegbar ist, und daß mittels einer Einrichtung (2) die Öffnungen derart in eine zueinander versetzte oder verschwenkte Lage bringbar sind, daß der Tampen (1) unbeweglich in den Öffnungen gehalten ist.

2. Vorrichtung nach Anspruch 1,
   dadurch gekennzeichnet, daß an einem Teil (1a, 14) der Vorrichtung wenigstens eine, vorzugsweise zwei Öffnungen (10, 10') und an einem anderen Teil (7, 15) der Vorrichtung wenigstens zwei, vorzugsweise drei Öffnungen (12, 12') ausgebildet sind, wobei die letzteren Öffnungen jeweils beidseitig der ersteren Öffnungen angeordnet sind.

3. Vorrichtung nach Anspruch 1 oder 2,
   dadurch gekennzeichnet, daß die Einrichtung eine Übertotpunkthebeleinrichtung (2) ist.

4. Vorrichtung nach einem der Ansprüche 1 bis 3,
dadurch gekennzeichnet, daß die Vorrichtung eine Manschette (1a) aufweist, die den Gabelbaumholm (14) oder dergleichen umschließt, und daß die Übertotpunkthebeleinrichtung (2) zwischen einer Öffnungsstellung der Manschette, in der diese entlang des Gabelbaumholms (14) oder dergleichen verschiebbar ist, und einer Schließstellung bewegbar ist, in der die Manschette unbeweglich am Holm sitzt.

5. Vorrichtung nach einem der Ansprüche 1 bis 4,
dadurch gekennzeichnet, daß an einem Endabschnitt eines Manschettenteils (1a, 14) stationäre Öffnungen (10, 10') und an dem Endabschnitt des Spannhebels (5) oder dem Endabschnitt eines weiteren Manschettenteils (7, 15),der mit dem Spannhebel (5) verbunden ist, verlagerbare Öffnungen (12, 12') ausgebildet sind, so daß durch Schließen der Übertotpunkthebeleinrichtung (2) gleichzeitig die Manschette am Holm (14) und der Tampen (1) in den Öffnungen in einen unbeweglichen Sitz genommen sind.

6. Vorrichtung nach einem der Ansprüche 1 bis 5,
dadurch gekennzeichnet, daß die Öffnungen (10, 12; 10', 12') durch angeformte ringförmige Ansätze (9, 11) gebildet sind.

7. Vorrichtung nach einem der Ansprüche 1 bis 6,
dadurch gekennzeichnet, daß die Öffnungen (10', 12') eine Querschnittsform haben, die sich zum freien Ende der Öffnungen hin verjüngt.

8. Vorrichtung nach einem der Ansprüche 1 bis 7,
dadurch gekennzeichnet, daß die Öffnungen durch hakenförmig geöffnete Ansätze gebildet sind.

9. Vorrichtung nach einem der Ansprüche 1 bis 8,
dadurch gekennzeichnet, daß die aufeinanderfolgenden ringförmigen Ansätze (9, 11) axial voneinander beabstandet sind.

10. Vorrichtung nach Anspruch 4,
dadurch gekennzeichnet, daß die Öffnungen mit der Manschette verbunden sind und mittels einer weiteren Einrichtung in einer zueinander versetzte oder verschwenkte Lage bringbar sind.

FIG.1

FIG.2

FIG. 3

EP 0 485 942 A1

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 535 623 (G.REICHEL)<br>* Zusammenfassung; Abbildungen *<br>--- | 1,2,7-9 | B63H9/10<br>F16G11/10<br>//B63B35:79 |
| X | WO-A-8 802 077 (NATIONAL MOLDING CORPORATION)<br>* Abbildungen 9-12 *<br>--- | 1,2,7-9 | |
| X | EP-A-0 033 132 (G.SIEGMANN)<br>* Zusammenfassung; Abbildungen *<br>--- | 1,3,9 | |
| A | DE-U-8 805 546 (F.BRUDER)<br>* Ansprüche; Abbildungen *<br>--- | 3-5 | |
| A | DE-A-2 837 534 (P.DORNFELD)<br>* Abbildungen *<br><br>----- | 3-5 | |
|   |   |   | **RECHERCHIERTE SACHGEBIETE (Int. Cl.5 )**<br><br>B63B<br>F16G |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1992 | STIERMAN E.J. |